# EUROPEAN PATENT APPLICATION

(11) **EP 1 477 980 A1**
(43) Date of publication of application: **17.11.2004**
(21) Application number: 04252512.1
(22) Date of filing: 29.04.2004
(51) Int. Cl.: G11B 19/12, G11B 7/004

(54) **Recording medium identification apparatus, information reproduction apparatus and information recording apparatus**

(30) Priority: 13.05.2003 JP 2003134498
(71) Applicant: Pioneer Corporation, Tokyo-to (JP)
(72) Inventor: Goto, Hiroki Pioneer Corporation, Kawagoe-shi Saitama-ken (JP); Nishio, Yoshimichi Pioneer Corporation, Kawagoe-shi Saitama-ken (JP); Hashizuka, Yoshihiro Pioneer Corporation, Kawagoe-shi Saitama-ken (JP); Iwano, Hideyasu Pioneer Corporation, Kawagoe-shi Saitama-ken (JP); Fukamachi, Junichi Pioneer Corporation, Kawagoe-shi Saitama-ken (JP)
(74) Representative: Townsend, Victoria Jayne

(57) **Abstract**

A recording medium identification apparatus that emits a light beam (9) onto a recording medium (1) having recording layers, is provided with; a recording-layer-number-judgment device (6) which determines the number of the recording layers on the recording medium (1) based on the reflected light of the light beam that is reflected from the recording medium; a first identification device (6) which identifies that the recording medium is a recording medium that includes two or more the recording layers when the recording medium (1) is determined to have two or more the recording layers; a shape-judgment device (6) which determines the shape of the recording track on the recording layer based on the reflected light when it is determined that the number of the recording layers is one; and a second identification device (6) which further classifies and identifies the type of recordingmedium (1) that includes one the recording layer based on the determined shape.

## Description

### BACKGROUND OF THE INVENTION

### 1.Field of the Invention:

This invention relates to a recording medium identification apparatus, information reproduction apparatus and information recording apparatus.

### 2. Related Art:

Recording media includes optical discs that are formed with a wobble and are capable of recording, and optical discs that are not formed with a wobble and are only capable of reproduction. Conventionally, there has been a method of identifying the type of an optical disc that has been inserted into an information-reproduction apparatus or the like by checking the wobble frequency, and for an optical disc on which protected contents are recorded, identifying the type of optical disc by checking this wobble frequency may be set.

The wobble formed on the optical disc is the shape of the meandering recording track that is formed on the optical disc, and the wobble frequency is the frequency that the meandering recording track is repeated. Details are disclosed in patent document (see US2002159351A1.)

In an information-reproduction apparatus, when starting the reproduction operation or recording operation for an optical disc that has been inserted into the apparatus, it is necessary to identify the type of the inserted optical disc, and set up the apparatus to the reproduction state or recording state to correspond to that optical disc. In an information-reproduction apparatus that employs the method described above for identifying the type of the optical disc, the type of the optical disc is identified by executing a process that checks the wobble frequency of all of the inserted optical discs. In this case, this process for checking the wobble frequency had to be executed even for optical discs on which a wobble was not formed, and so it took time to identify the type of the optical disc inserted in the apparatus. As a result, it took more time than necessary from after the optical disc was inserted until the set-up operation was completed; for example, there was a problem in that in the case of an information-reproduction apparatus, it took more time than necessary after the user inserted the optical disc into the apparatus until the information such as video or audio on that inserted optical disc could be provided.

### SUMMARY OF THE INVENTION

Taking into consideration the inconveniences mentioned above as an example of the inconvenience to be solved by the invention, the object of this invention is to provide a recording-medium identification apparatus, information reproduction apparatus and information-recording apparatus that is capable of reducing the time required for set up by efficiently performing identification of the type of optical disc.

The above obj ect of the present invention can be achieved by an recording-medium-identification apparatus of the present invention. The recording-medium-identification apparatus that emits a light beam onto a recording medium having recording layers and identifies the type of the recording medium, is provided with a recording-layer-number judgment device which determines the number of the recording layers on the recording medium based on the reflected light of the light beam that is reflected from the recording medium; a first identification device which identifies that the recording medium is a recording medium that includes two or more the recording layers when the recording medium is determined to have two or more the recording layers; a shape-judgment device which determines the shape of the recording track on the recording layer based on the reflected light when it is determined that the number of the recording layers is one; and a second identification device which further classifies and identifies the type of recording medium that includes one the recording layer based on the determined shape.

According to the present invention, by having a microcomputer use the specified wobble frequency signal before other wobble frequency signals to identify the type of optical disc, it is possible to quickly identify the specified type of optical disc, so for example, it becomes possible to shorten the time that the user has to wait in order to reproduce the information on the specified type of optical disc. Therefore, it can be seen that when reproducing a DVD-RW disc or DVD-R disc, by using the -RW/-R filter circuit before the +RW/+R filter circuit when detecting wobble, it is possible to shorten the identification time for identifying a DVD-RW disc or DVD-R disc, and thus it is possible to start reproducing or recording information on the optical disc very quickly.

The above object of the present invention can be achieved by a recording-medium-identification method of the present invention. The recording-medium-identification method that emits a light beam onto a recording medium having recording layers and identifies the type of the recording medium, comprising: a recording-layer-number-judging process of judging the number of the recording layers on the recording medium based on the reflected light of the light beam that is reflected from the recordingmedium; a first identification process of identifying the recording medium is a recording medium that includes two or more the recording layers when the recordingmedium is judged to have two ormore the recording layers; a shape-judging process of judging the shape of the recording track on the recording layer based on the reflected light when it is determined that the number of the recording layers is one; and a second identification process of classifying and identifying the type of recording medium that includes one the recording layer based on the determined shape.

According to the present invention, by having a microcomputer use the specified wobble frequency signal before other wobble frequency signals to identify the type of optical disc, it is possible to quickly identify the specified type of optical disc, so for example, it becomes possible to shorten the time that the user has to wait in order to reproduce the information on the specified type of optical disc.

The above obj ect of the present invention can be achieved by an information recording medium of the present invention. The information recording medium in which a recording-medium identification program is recorded in a readable way by a recording computer included in a recording-medium identification apparatus, the recording-medium identification program causing the recording computer to function as: a recording-layer-number-judgment device which determines the number of the recording layers on the recording medium based on the reflected light of the light beam that is reflected from the recordingmedium; a first identification device which identifies that the recording medium is a recording medium that includes two ormore the recording layers when the recording medium is determined to have two or more the recording layers; a shape-judgment device which determines the shape of the recording track on the recording layer based on the reflected light when it is determined that the number of the recording layers is one; and a second identification device which further classifies and identifies the type of recording medium that includes one the recording layer based on the determined shape.

### BRIEF DESCRIPTION OF THE DRAWINGS

Fig. 1 is a block diagram of the information-recording /reproduction apparatus of an embodiment of this invention;
Fig. 2A shows the frequency-gain characteristics of a - RW/-R filter circuit 41 and RW/+R filter circuit 42;
Fig. 2B shows the frequency-phase characteristics of - RW/-R filter circuit 41 and RW/+R filter circuit 42;
Fig. 3 is a flowchart for identifying the type of an optical disc;
Fig. 4 is a drawing showing the push-pull signal Sb;
Fig. 5A is the band-limited signal Se obtained from a DVD-RW or DVD-R disc after passing through the -RW/-R filter circuit 41;
Fig. 5B is a the band-limited signal Se obtained from a DVD+RW or DVD+R disc after passing through the +RW/+R filter 42;
Fig. 6A is a band-limited signal Se that is obtained from a DVD-ROM disc after passing through the -RW/-R filter circuit 41;
Fig. 6B is aband-limited signal Se obtained froma DVD-ROM disc after passing through the +RW/+R filter circuit 42;
Fig. 7A is a drawing showing the time required for measuring the frequency after passing through the -RW/-R filter circuit 41; and
Fig 7B is a drawing showing the time required to measure the frequency after passing through the +RW/+R filter circuit 42.

### DESCRIPTION OF THE PREFERRED EMBODIMENT

The preferred embodiment of the information recording/reproduction apparatus of this invention is explained below.

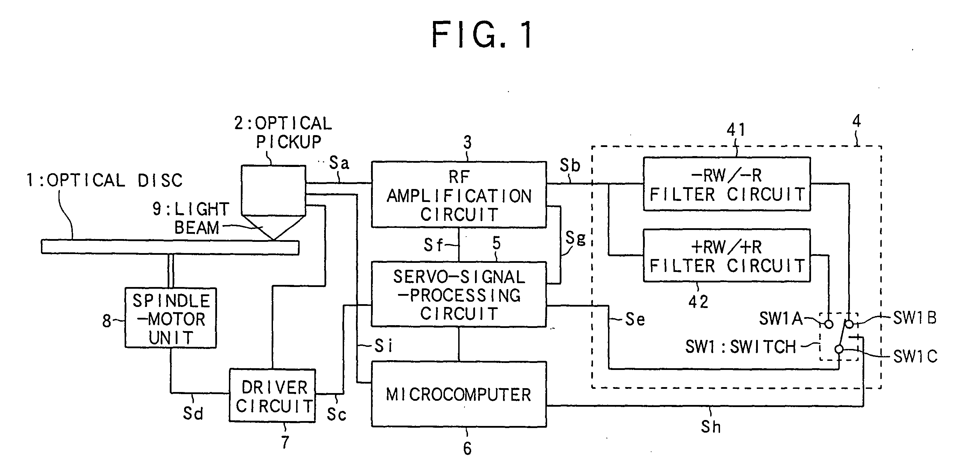

Fig. 1 is a block diagram showing the construction of the information recording/reproduction apparatus of an embodiment of the invention.

The information recording/reproduction apparatus of this embodiment is provided with: an optical pickup 2, RF (Radio Frequency) signal-amplifier circuit 3, wobble-detection-filter circuit 4, servo-signal-processing circuit 5, microcomputer 6, driver circuit 7, and spindle-motor unit 8.

Also, the wobble-detection-filter circuit 4 is provided with a -RW/-R filter circuit 41 for detecting the wobble frequency of a DVD-RW (Digital Versatile Disc-Re-Recordable) and DVD-R (DVD-Recordable) disc, a +RW/+R filter circuit 42 for detecting the wobble frequency of a DVD+RW and DVD+R disc, and a switch SW1.

When reproducing information from information pits that are formed on the optical disc 1, the servo-signal-processing circuit 5 sends a servo-control signal SC to the driver circuit 7 according to an instruction from the microcomputer 6, and the driver circuit 7 drives the optical pickup 2 based on the servo-control signal Sc, and moves the optical pickup 2 to a desired location on the optical disc 1. Moreover, the driver circuit 7 sends a motor-control signal Sd to the spindle-motor unit 8. The spindle-motor unit 8 rotates the optical disc 1 based on the motor-control signal Sd.

When a light beam 9 is shown onto the optical disc 1 from the optical pickup 2, return light is generated corresponding to whether or not there are information pits. That return light, is picked up by way of the optical pickup 2 and converted from light to an electrical reproduction signal Sa, and then sent to the RF-signal-amplification circuit 3. This reproduction signal Sa is amplified by the RF-signal-amplification circuit 3 and then input to the servo-signal-processing circuit 5 as an RF signal Sg. In the servo-signal-processing circuit 5, the RF signal Sg is demodulated, and processing such as error correction is performed, then it is sent to the microcomputer 6. In the microcomputer 6, the RF signal Sg, for which a specified signal process was performed, is converted to an audio signal or video signal, and then the converted signals are converted from digital to analog and output to the speakers and display apparatus (not shown in the figures). The speakers output the input audio signal as sound, and the display apparatus displays the input video signal as video. The RF-signal-amplification circuit 3 generates a focus-error signal and tracking-error signal, and sends them to the servo-signal-processing circuit .5. Also, based on these signals, the servo-signal-processing circuit 5 generates a servo-control signal Sc and sends it to the driver circuit 7. Also, based on that servo-control signal Sc, the driver circuit 7 adjusts the focus of the optical pickup 2, adjusts the tracking, and properly controls the rpm of the spindle-motor unit 8. Also, the reproduction signal Sa is amplified by the RF-signal-amplification circuit 3, and sent to the wobble-detection-filter circuit 4 as a push-pull signal Sb.

The control signal Sh from the microcomputer 6 drives the switch SW1, and by connecting the contact SW1B with the contact SW1C, it selects the -RW/-R filter circuit 41 for detecting the wobble frequency of a DVD-RW disc and DVD-R disc, which are kinds of the optical disc 1. Moreover, control signal Sh from the microcomputer drives the switch SW1, and by connecting contact SW1A with contact SW1C, it selects the +RW/+R filter circuit 42 for detecting the wobble frequency of a DVD+RW disc and DVD+R disc, which are kinds of the optical disc 1.

The band-limited signal Se is input to the servo-signal-processing circuit 5 by way of the -RW/-R filter circuit 41 or +RW/+R filter circuit 42. The frequency of the band-limited signal Se is measured by the servo-signal-processing circuit 5, and the value of that frequency is sent to the microcomputer 6. The microcomputer 6 identifies the type of the optical disc 1 according to that frequency value.

Also, when recording information on the optical disc 1, the servo-signal-processing circuit 5 sends a servo-control signal Sc to the driver circuit 7 according to an instruction from the microcomputer 6. The driver circuit 7 drives the optical pickup 2 based on the servo-control signal Sc, and moves the optical pickup 2 to a desired location on the optical disc 1. Also, the driver circuit 7 sends a motor-control signal Sd to the spindle-motor unit 8. The spindle-motor unit 8 rotates the optical disc 1 based on the motor-control signal Sd. The microcomputer 6 performs specified signal processing of the information input from the outside and then sends that processed signal information to the optical pickup 2 as a recording signal Si. Moreover, the optical pickup 2 emits an optical beam 9 onto the optical disc 1 that is stronger than the beam used during reproduction, and records the recording signal Si onto the optical disc 1. Information pits are formed on the optical disc 1 by the recorded recording signal Si.

After the microcomputer 6 identifies the type of the optical disc 1, it perform settings for reproducing or recording information on the optical disc 1 based on that type of optical disc. In other words, the microcomputer 6 sends an instruction to the servo-signal-processing circuit 5 to perform settings corresponding to the identified type of optical disc 1, and the servo-signal-processing circuit 5 controls the driver circuit 7 to perform settings such as the rpm of the spindle-motor unit 8, and the strength of the laser beam 9 that is shown from the optical pickup 2.

Next, the -RW/-R filter circuit 41, or +RW/+R filter circuit 42 will be explained in detail.

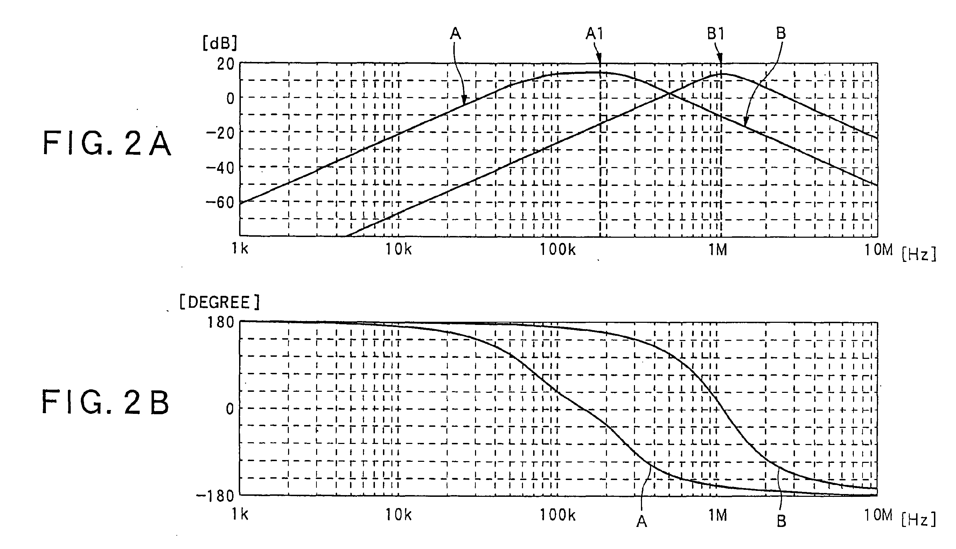

Fig. 2A is a drawing showing the frequency-gain characteristics of the -RW/-R filter circuit 41 and +RW/+R filter circuit used in this embodiment. Fig. 2B is a drawing showing the frequency-phase characteristics of the -RW/-R filter circuit 41 and +RW/+R filter circuit used in this embodiment. The frequency characteristics shown in botli Fig. 2A and Fig. 2B are the frequency characteristics at 1.3 times the normal rpm when reproducing the information on the optical disc 1. Therefore, the frequency of approximately 183 kHz, which is 1.3 times the wobble frequency of 140.645 kHz at the normal rpm of a DVD-RW disc and DVD-R disc, is the middle frequency Al of the -RW/-R filter circuit 41, and the frequency of approximately 1,062 kHz, which is 1.3 times the wobble frequency of 817 kHz at the normal rpm of a DVD+RW disc and DVD+R disc, is the middle frequency B1 of the +RW/+R filter circuit 42. In this embodiment, when identifying the type of the optical disc 1, the optical disc is rotated at an rpm that is 1.3 times the normal rpm when reproducing the information on the optical disc 1, however, the rpm is not limited to this, and it is possible to rotate the disc at an arbitrary rpm. Therefore, naturally the middle frequency of the filter circuit can be set to a value that corresponds to the rpm of the optical disc.

Fig. 2A shows frequency along the horizontal axis using a logarithmic scale, and shows the gain (dB: decibels) along the vertical axis. Graph A shows the frequency-gain characteristics of the -RW/-R filter circuit 41, and graph B shows the frequency-gain characteristics of the +RW/+R filter circuit 42. The middle frequency of the -RW/-R filter circuit 41 is approximately 183 kHz, and has a 247 kHz pass bandwidth from the middle frequency A1, and frequencies that are higher and lower than that pass bandwidth are damped by - 40 dB/decade. The middle frequency of the +RW/+R filter circuit 42 is approximately 1,062 kHz, and has a 807 kHz pass bandwidth from the middle frequency B1, and frequencies that are higher and lower than that pass bandwidth are damped by - 40 dB/decade.

Therefore, the -RW/-R filter circuit 41 and +RW/+R filter circuit 42 function sufficiently as band pass filters.

Fig. 2B shows the frequency along the horizontal axis using a logarithmic scale, and shows the phase (angle) along the vertical axis. Graph A shows the frequency-phase characteristics of the -RW/-R filter circuit 41, and graph B shows the frequency-phase characteristics of the +RW/+R filter circuit 42. The middle frequency A1 of the -RW/-R filter circuit 41 is approximately 183 kHz, and when the frequency becomes lower than the middle frequency A1, the phase becomes a positive value, and changes up to a maximum value of +180 degrees. When the frequency becomes higher than the middle frequency A1, the phase becomes a negative value, and changes up to a maximum value of -180 degrees. Graph B shows the frequency-gain characteristics of the -RW/-R filter circuit 41. The middle frequency B1 of the +RW/+R filter circuit 42 is approximately 1,062 kHz, and when the frequency becomes lower than the middle frequency B1, the phase becomes a positive value, and changes up to a maximum value of +180 degrees. When the frequency becomes higher than the middle frequency B1, the phase becomes a negative value, and changes up to a maximum value of -180 degrees.

Therefore, it can be seen that the -RW/-R filter circuit 41 and+RW/+R filter circuit 42 are stable circuits as band-pass filters.

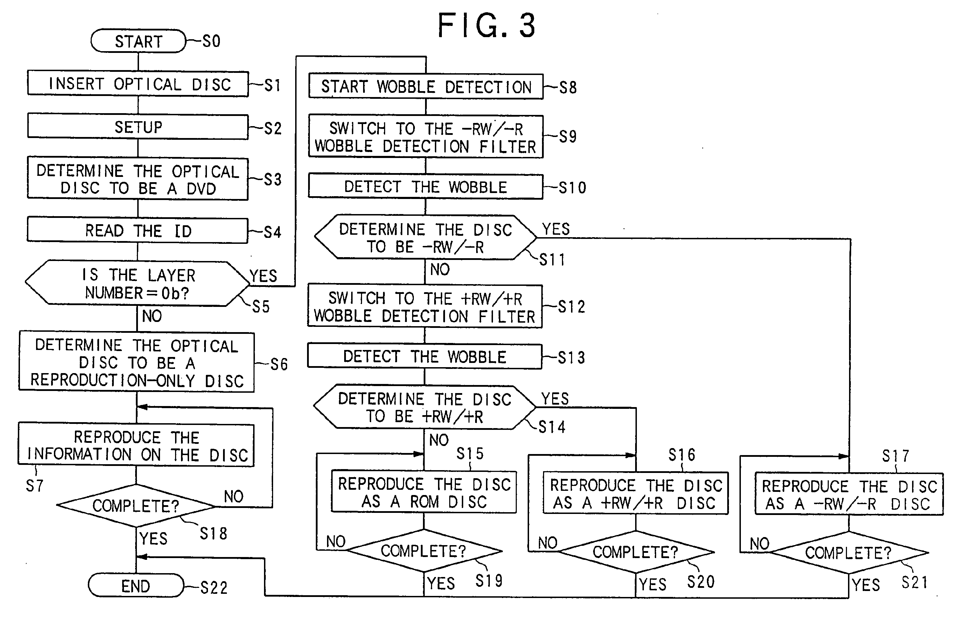

Next, a flowchart will be used to explain the operation of this embodiment. Fig. 3 shows a flowchart for identifying the type of the optical disc 1.

In step S0, the process for identifying the type of optical disc and the reproduction process are started.

In step S1, the optical disc 1 is inserted into the information recording/reproduction apparatus.

In step S2, the information recording/reproduction apparatus starts the setup operation. First, the servo-signal-processing circuit 5 sends a servo-control signal Sc to the driver circuit 7 according to an instruction from the microcomputer 6, and then the driver circuit 7 drives the optical pickup 2 based on the servo-control signal Sc and moves the optical pickup 2 to a desired location on the optical disc 1. Also, the driver circuit 7 sends a motor-control signal Sd to the spindle-motor unit 8, and the spindle-motor unit 8 rotates the optical disc 1 based on that motor-control signal Sd. The driver circuit 7 also adjusts the focus and tracking of the optical pickup 2.

In step S3, it is checked whether the inserted optical disc 1 is a DVD. The method of checking could be a method of checking changes in the servo signal Sf when the wavelength of the optical pickup 2 is changed.

In step S4, based on the servo-control signal Sc from the servo-signal-processing circuit 5, the optical pickup 2 moves to the information-pit location where recording layer number data is recorded on the optical disc 1. The pickup 2 emits a light beam 9 at that location and reads the information pit where the recording layer number of the optical disc is recorded. (The information that contains the recording number is called the ID (Identification) information below.) The light beam 9 is shown onto the optical disc 1, and the optical pickup 2 converts the returning light from light to an electrical signal, and inputs that signal to the amplifier circuit 3 as a reproduction signal Sa where it is amplified and then input to the servo-processing circuit 5 as an RF signal Sg. The servo-signal-processing circuit 5 demodulates the RF signal Sg, and obtains the ID information by performing error detection and correction. Moreover, it outputs that ID information to the microcomputer 6.

In step S5, when the microcomputer 6 determines that the ID information indicates the second layer (step S5: No) , the microcomputer 6 moves on to step S6, and when it determines that the ID information indicates the first layer (step S5: Yes), it moves on to step S8.

In step S6, the ID information indicates the second layer, so the optical disc 1 is identified as a reproduction-only 2-layer optical disc. Also, according to an instruction from the microcomputer 6, the servo-signal-processing circuit 5 controls the driver circuit 7 and sets the reproduction-only DVD to the reproduction state. When this setting is complete, the setup operation is complete.

In step S7, reproduction of the optical disc 1 starts. Also, the microcomputer 6 advances to step S18. In step S18, the microcomputer 6 determines whether or not reproduction of the optical disc 1 is completed.

In step S18, when reproduction of the inserted optical disc 1 is completed (step S18: Yes), the microcomputer 6 advances to step S22, and when reproduction is not completed (step S18: No), it advances to the step S7.

With this kind of construction, it is possible to start reproduction of this non-recording type two-layer optical disc without detecting the wobble frequency, and thus it is possible to shorten the amount of time that the user has to wait to start reproduction.

Next, the operation starting from step S8 in which the wobble frequency is detected will be explained.

In step S8, detection of the wobble frequency starts.

In step S9, in order to detect the wobble frequency used by one kind of optical disc, one kind of band-limited filter circuit is selected. Here, as one example, the -RW/-R filter circuit 41 for a DVD-RW and DVD-R disc is selected. Switch SW1 is driven by the control signal Sh from the microcomputer 6, and by connecting contact SW1B and contact SW1C, the -RW/-R filter circuit 41 is selected. In step S10, the band-limited signal Se that has passed through the -RW/-R filter circuit 41 is input to the servo-signal-processing circuit 5.

In step S11, it is determined whether or not the main frequency component of the band-limited signal Se matches the wobble frequency formed on the DVD-RW or DVD-R disc. In this embodiment for example, it is determined whether or not this frequency is in the range of 140 . 645 kHz ± 50 kHz, however, in order to distinguish the frequency from the wobble frequency of another kind of optical disc, an arbitrary frequency and arbitrary frequency width between the main frequencies of the wobble frequencies can be selected. The frequency is not limited to the frequency of this embodiment. When the optical disc 1 is identified from the limited-band signal Se to be DVD-RW, DVD-R type optical disc, the process advances to step S17, and when the optical disc 1 is not identified to be a DVD-RW, DVD-R type optical disc, the process advances to step S12.

In step S12, in order to detect wobble frequencies used for other types of optical discs, another type of band-limited filter circuit is selected. Here, as one example, the +RW/+R filter circuit 42 for a DVD+RW disc and DVD+R disc is selected. The control signal Sh from the microcomputer 6 drives the switch SW1, and the +RW/+R filter circuit 42 is selected by connecting contact SW1B and contact SW1A.

In step 13, the band-limited signal Se that passed through the +RW/+R filter circuit 42 is input to the servo-signal-processing circuit 5.

In step S14, it is determined whether or not the main component of the band-limited signal Se matches the wobble frequency formed on the DVD+RW and DVD+R disc. In this embodiment, for example, it is determined whether or not that frequency is in the range of 817 kHz ± 50 kHz, however, in order to distinguish that frequency from a wobble frequency of another kind of optical disc, it is possible to select an arbitrary frequency and arbitrary frequency width between the main frequencies of the wobble frequencies. When the optical disc 1 is identified from the band-limited signal Se as being a DVD+RW, DVD+R type of optical disc, the process advances to step S16, and when the optical disc is not identified as being a DVD+RW, DVD+R type of optical disc, the process advances to step S15.

In step S15, when the frequency component of the push-pull signal Sb is not extracted for either the -RW/-R filter circuit 41 or the +RW/+R filter circuit 42, the inserted optical disc 1 is identified as being a DVD-ROM disc, which is a reproduction-only optical disc, and the servo-signal-processing circuit 5 sets the state for reproducing the DVD-ROM disc according to an instruction from themicrocomputer 6. When this setting is completed, the setup operation is complete. Moreover, reproduction of the optical disc 1 starts. The process then advances to step S19.

In step S16, the inserted optical disc 1 is identified as being a DVD+RW or DVD+R disc, which is a recordable disc, and the servo-signal-processing unit 5 sets the state for reproducing the DVD+RW or DVD+R disc according to an instruction from the microcomputer 6. When this setting is completed, the setup operation is complete. Also, reproduction of the optical disc 1 starts. Then the process advances to step S20.

In step S17, the inserted optical disc 1 is identified as being a DVD-RW or DVD-R disc, which is a recordable disc, and the servo-signal-processing unit 5 sets the state for reproducing the DVD-RW or DVD-R disc according to an instruction from the microcomputer 6. When this setting is completed, the setup operation is complete. Also, reproduction of the optical disc 1 starts. Then the process advances to step S21.

In step S19 , it is determined whether or not reproduction of the optical disc 1 has finished.

In step S19, when reproduction of the inserted optical disc 1 has finished (step S19: Yes), the process advances to step S22, however, when reproduction is not finished (step S19: No), the process goes to step S15.

In step S20 , it is determined whether or not reproduction of the optical disc 1 is finished.

In step S20, when reproduction of the inserted optical disc 1 is finished (step S20: Yes) , the process advances to step S22, however, when reproduction is not finished (step S20: No), the process goes to step S16.

In step S21, it is determined whether or not reproduction of the optical disc 1 is finished.

In step S21, when reproduction of the inserted optical disc 1 is finished (step S21: Yes) , the process advances to step S22, however, when reproduction is not finished (step S21: No), the process goes to step S17.

In this embodiment, by using the construction described above, it is possible to reduce the time required to identify a DVD-RW or DVD-R disc, and thus it is possible to reduce the time from when the DVD-RW disc or DVD-R disc is inserted until the setup operation is complete. In this embodiment, to extract the wobble frequency, a DVD-RW or DVD-R filter circuit 41 is first applied in the wobble-detection flowchart of Fig. 3, however the invention is not limited to this, and it is possible to first apply a suitable filter circuit as the judgment means for quickly determining the type of optical disc. The flowchart shown in Fig. 3 and described above shows the process for identifying the optical disc and the reproduction process, however, processing could also be executed according to a similar flowchart for the process of identifying the type of optical disc and the recording process. In the case of applying a recording process, when the optical disc 1 is identified as being a reproduction-only optical disc in step S5 and step 14, that optical disc 1 is ejected from the apparatus without the process advancing to the reproduction process. Also, when the optical disc 1 is identified in step S11 and step S14 as being a recordable optical disc 1, the process of recording information from the outside on the optical disc 1 is performed in step S16 and step S17.

Next, the signal waveforms observed in steps S8, S10 and S13 are explained.

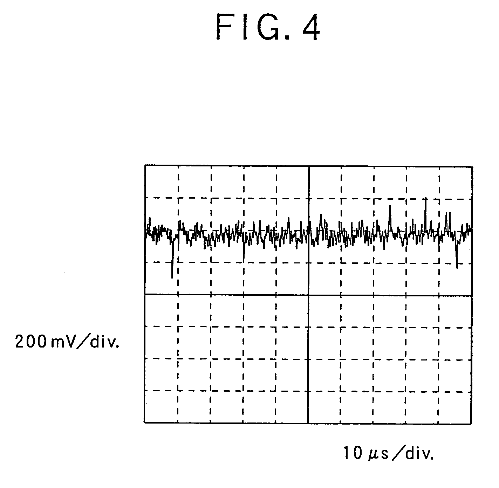

Fig. 4 is a drawing showing the waveform of the push-pull signal in step S8. The horizontal axis is the time line and is expressed as 10 µs/division (one division is one gradation on the vertical or horizontal axis) . The vertical axis shows the size of the push-pull signal Sb in voltage, and is expressed as 200 mV/division. The push-pull signal Sb before passing through the wobble-detection-filter circuit 4 is an irregular signal whose unique frequency cannot be determined. Therefore, since the wobble frequency of the optical disc cannot be detected, it is not possible to identify the type of the optical disc 1.

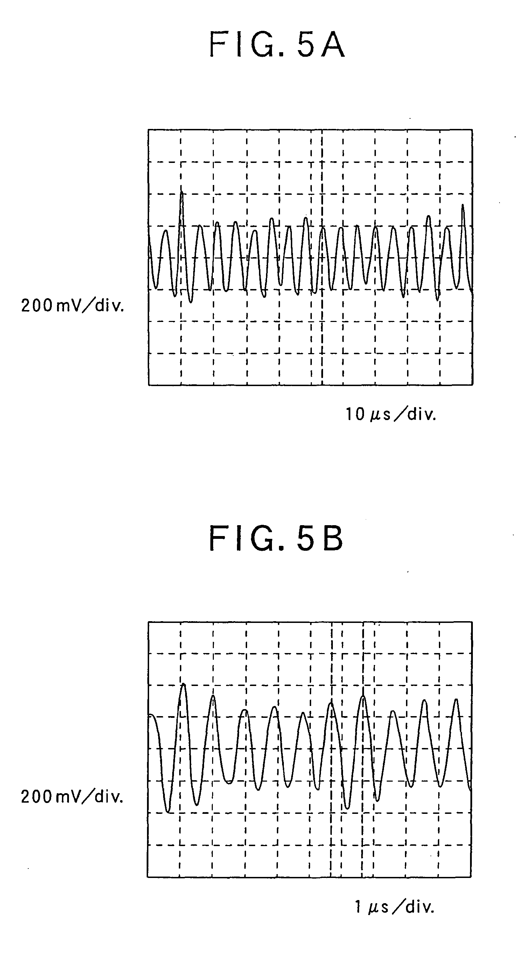

Fig. 5A is the band-limited signal Se that is obtained in step S10 by way of the -RW/-R filter circuit 41 and contacts SW1B and SW1C of switch SW1 from the push-pull signal Sb obtained from a DVD-RW and DVD-R disc. The horizontal axis is the time line and is expressed as 10 µs/division, and the vertical axis is the size of the band-limited signal Se as a voltage, and is expressed as 200 mV/division. A sinusoidal wave having a frequency of about 183 kHz is obtained. The servo-signal-processing circuit 5 measures the frequency of the band-limited signal Se. By determining that frequency, the microcomputer 6 identifies that the optical disc to be recorded or reproduced is a DVD-RW disc or DVD-R disc.

Fig. 5B is the band-limited signal Se that is obtained in step S13 by way of the +RW/+R filter circuit 42 and contacts SW1A and SW1C of switch SW1 from the push-pull signal Sb obtained from a DVD+RW and DVD+R disc. The horizontal axis is the time line and is expressed as 1 µs/division, .and the vertical axis is the size of the band-limited signal Se as a voltage, and is expressed as 200 mV/division. A sinusoidal wave having a frequency of about 1,062 kHz is obtained. The servo-signal-processing circuit 5 measures the frequency of the band-limited signal Se. By determining that frequency, the microcomputer 6 identifies that the optical disc to be recorded or reproduced is a DVD+RW disc or DVD+R disc.

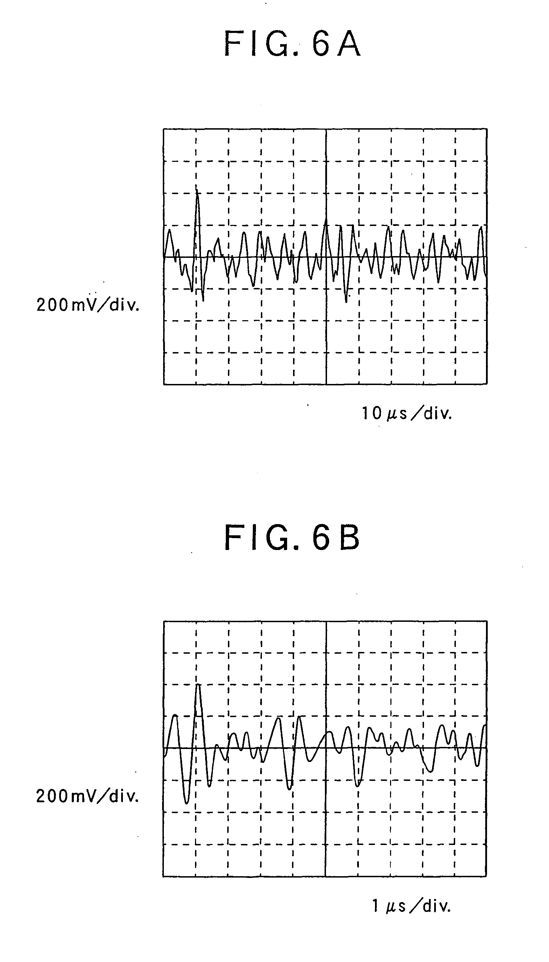

Fig. 6A is the band-limited signal Se that is obtained in step S10 by way of the -RW/-R filter circuit 41 and contacts SW1B and SW1C of switch SW1 from the push-pull signal Sb obtained from a DVD-ROM disc. The horizontal axis is the time line and is expressed as 10 µs/division, and the vertical axis is the size of the band-limited signal Se as a voltage, and is expressed as 200 mV/division. The signal does not have a simple frequency component, and as a result of the servo-signal-processing circuit 5 not being able to measure the frequency of the band-limited signal Se, the microcomputer 6 is not able to identify the type of the optical disc. Therefore, the optical disc for which recording or reproduction is to be performed is identified as not being a DVD-RW disc or DVD-R disc.

Fig. 6B is the band-limited signal Se that is obtained in step S13 by way of the +RW/+R filter circuit 42 and contacts SW1A and SW1C of switch SW1 from the push-pull signal Sb obtained from a DVD-ROM disc. The horizontal axis is the time line and is expressed as 1 µs/division, and the vertical axis is the size of the band-limited signal Se as a voltage, and is expressed as 200 mV/division. The signal does not have a simple frequency component, and as a result of the servo-signal-processing circuit 5 not being able to measure the frequency of the band-limited signal Se, the microcomputer 6 is not able to identify the type of the optical disc. Therefore, the optical disc for which recording or reproduction is to be performed is identified as not being a DVD+RW disc or DVD+R disc.

A method was explained above in which when the push-pull signal Sb that passed through the -RW/-R filter circuit 41 or +RW/+R filter circuit 42 had a simple frequency component, the servo-signal-processing circuit 5 was able to measure the frequency, and as a result the optical disc could be identified as being a DVD-RW, DVD-R disc, or a DVD+RW, DVD+R disc.

Therefore, in an information recording/reproduction apparatus that emits a light beam onto the optical disc and identifies the type of the optical disc and that is provided with: an optical pickup that receives the reflected light beam from the optical disc and outputs a received-light signal; a filter circuit 41 for detecting a certain wobble frequency signal Se from the output light signal that corresponds to the wobble frequency of the recorded track of a specified optical disc from among a plurality of kinds of optical discs; a filter circuit 42 for detecting another wobble frequency signal Se from the output light signal that corresponds to the wobble frequency of the recorded track of a another optical disc from among a plurality of kinds of optical discs that is different than the specified optical disc; and a microcomputer 6 that uses at least the specified wobble frequency signal or the other wobble frequency signal to identify the type of optical disc; it is possible to identify the type of optical disc by detecting the wobble frequency.

Moreover, in a recording-medium-identification apparatus, by having a microcomputer use the specified wobble frequency signal before other wobble frequency signals to identify the type of optical disc, it is possible to quickly identify the specified type of optical disc, so for example, it becomes possible to shorten the time that the user has to wait in order to reproduce the information on the specified type of optical disc.

### [Examples]

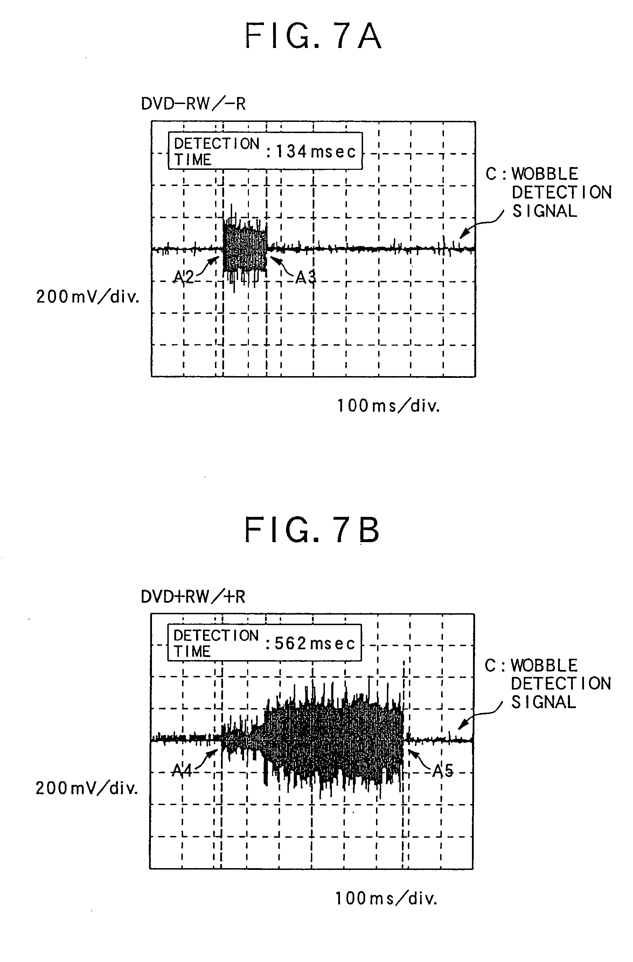

Fig. 7A is a drawing showing the time required for the frequency of the band-limited signal Se that has passed through the -RW/-R filter circuit 41 shown in Fig. 5A to be measured by the servo-signal-processing circuit 5. The horizontal axis is the time line that is expressed as 100 ms/division, and the vertical axis is the size of the signal Se as a voltage, expressedas200mV/division. Cisthewobbledetectionsignal, and wobble detection starts at A2 and wobble detection ends at A3 . It can be seen that detection takes approximately 134 ms.

Fig. 7B is a drawing showing the time required for the frequency of the band-limited signal Se that has passed through the +RW/+R filter circuit 42 shown in Fig. 58 to be measured by the servo-signal-processing circuit 5. The horizontal axis is the time line that is expressed as 100 ms/division, and the vertical axis is the size of the signal Se as a voltage, expressed as 200mV/division . C is the wobble detection signal and wobble detection starts at A4 and wobble detection ends at A5. It can be seen that detection takes approximately 562 ms.

Therefore, it can be seen that when reproducing a DVD-RW disc or DVD-R disc, by using the -RW/-R filter circuit 41 before the +RW/+R filter circuit 42 when detecting wobble, it is possible to shorten the identification time for identifying a DVD-RW disc or DVD-R disc, and thus it is possible to start reproducing or recording information on the optical disc very quickly.

It should be understood that various alternatives to the embodiment of the invention described herein may be employed in practicing the invention. Thus, it is intended that the following claims define the scope of the invention and that methods and structures within the scope of these claims and their equivalents be covered thereby.

## Claims

1. A recording-medium-identification apparatus that emits a light beam (9) onto a recording medium (1) having recording layers and identifies the type of said recording medium, **characterized in that** the recording-medium-identification apparatus comprises:
a recording-layer-number-judgment (6) device which determines the number of said recording layers on said recording medium based on the reflected light of said light beam that is reflected from said recording medium;
a first identification device (6) which identifies that said recording medium is a recording medium that includes two or more said recording layers when said recording medium is determined to have two or more said recording layers;
a shape-judgment device (6) which determines the shape of the recording track on said recording layer based on said reflected light when it is determined that the number of said recording layers is one; and
a second identification device (6) which further classifies and identifies the type of recording medium that includes one said recording layer based on said determined shape.

2. An information reproduction apparatus, **characterized in that** the information reproduction apparatus comprises:
a recording-layer-number-judgment (6) device which determines the number of said recording layers on said recording medium (1) based on the reflected light of said light beam (9) that is reflected from said recording medium;
a first identification device (6) which identifies that said recording medium is a recording medium that includes two or more said recording layers when said recording medium is determined to have two or more said recording layers;
a shape-judgment device (6) which determines the shape of the recording track on said recording layer based on said reflected light when it is determined that the number of said recording layers is one;
a second identification device (6) which further classifies and identifies the type of recording medium that includes one said recording layer based on said determined shape; and
a reproduction device which (6) reproduces the information recorded on said recording medium based on the type of said recording medium that is identified by said recording-medium-identification apparatus.

3. An information recording apparatus **characterized in that** the information recording apparatus comprises:
a recording-layer-number-judgment device (6) which determines the number of said recording layers on said recording medium based on the reflected light of said light beam that is reflected from said recording medium;
a first identification device (6) which identifies that said recording medium is a recording medium that includes two or more said recording layers when said recording medium is determined to have two or more said recording layers;
a shape-judgment device (6) which determines the shape of the recording track on said recording layer based on said reflected light when it is determined that the number of said recording layers is one;
a second identification device (6) which further classifies and identifies the type of recording medium that includes one said recording layer based on said determined shape; and
a recording device (6) which records information onto said recording medium based on the type of said recording medium that is identified by said recording-medium-identification apparatus.

4. A recording-medium-identification method that emits a light beam onto a recording medium having recording layers and identifies the type of said recording medium, **characterized in that** the recording-medium-identification method comprises:
a recording-layer-number-judging process of judging the number of said recording layers on said recording medium based on the reflected light of said light beam that is reflected from said recording medium;
a first identification process of identifying said recording medium is a recording medium that includes two or more said recording layers when said recordingmedium is judged to have two or more said recording layers;
a shape-judging process of judging the shape of the recording track on said recording layer based on said reflected light when it is determined that the number of said recording layers is one; and
a second identification process of classifying and identifying the type of recording medium that includes one said recording layer based on said determined shape.

5. An information recording medium in which a recording-medium-identification program is recorded in a readable way by a computer included in a recording-medium identification apparatus, **characterized in that** the recording-medium identification program causing the recording computer to function as:
a recording-layer-number-judgment device which determines the number of said recording layers on said recording medium based on the reflected light of said light beam that is reflected from said recording medium;
a first identification device which identifies that said recording medium is a recording medium that includes two or more said recording layers when said recording medium is determined to have two or more said recording layers;
a shape-judgment device which determines the shape of the recording track on said recording layer based on said reflected light when it is determined that the number of said recording layers is one; and
a second identification device which further classifies and identifies the type of recording medium that includes one said recording layer based on said determined shape.
